(19) Europäisches Patentamt
European Patent Office
Office européen des brevets

(11) **EP 2 581 875 A1**

(12) **EUROPEAN PATENT APPLICATION**
published in accordance with Art. 153(4) EPC

(43) Date of publication:
**17.04.2013 Bulletin 2013/16**

(51) Int Cl.:
*G06T 3/00* (2006.01)     *B60R 1/00* (2006.01)
*G08G 1/16* (2006.01)     *H04N 7/18* (2006.01)

(21) Application number: **11792075.1**

(22) Date of filing: **14.04.2011**

(86) International application number:
**PCT/JP2011/002210**

(87) International publication number:
**WO 2011/155112 (15.12.2011 Gazette 2011/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.06.2010 JP 2010131237**

(71) Applicant: Panasonic Corporation
**Kadoma-shi
Osaka 571-8501 (JP)**

(72) Inventors:
• TAKAHASHI, Koji
**Osaka-shi, Osaka 540-6207 (JP)**
• ICHINOSE, Tadao
**Osaka-shi, Osaka 540-6207 (JP)**

(74) Representative: **Grünecker, Kinkeldey, Stockmair & Schwanhäusser
Leopoldstrasse 4
80802 München (DE)**

(54) **INVERSE TRANSFORMATION TABLE GENERATION METHOD, INVERSE TRANSFORMATION TABLE GENERATION PROGRAM, IMAGE TRANSFORMATION DEVICE, IMAGE TRANSFORMATION METHOD, AND IMAGE TRANSFORMATION PROGRAM**

(57)     Disclosed is a method of generating an inverse conversion table capable of enabling the acquisition of an image prior to viewpoint conversion being performed on a predetermined image. A method of generating an inverse conversion table generates an inverse conversion table T1 for generating from a viewpoint-converted image an image prior to viewpoint conversion processing relating to the viewpoint-converted image as an inversely converted image. A control unit 11 calculates the distance $L(a,b)$ between a conversion reference coordinate P(a,b) stored in a table coordinate (a,b) of a viewpoint conversion table T2 and a calculation-target table coordinate (i,j) of an inverse conversion table T1 for each conversion reference coordinate, and calculates an inverse conversion reference coordinate $A(i,j)$ which is stored in the calculation-target table coordinate (i,j) of the inverse conversion table T1 on the basis of the distance $L(a,b)$ between the table coordinate (a,b) of the viewpoint conversion table T2 and the conversion reference coordinate stored in the table coordinate (a,b).

*FIG. 2*

Printed by Jouve, 75001 PARIS (FR)

**Description**

<Technical Field>

The present invention relates to a method of generating an inverse conversion table, a program for generating an inverse conversion table, an image conversion device, an image conversion method, and an image conversion program.

<Background Art>

In recent years, in order to improve traffic safety, an increasing number of vehicles have cameras (imaging devices) mounted therein such that a driver can confirm blind spots to the front, rear, left, and right sides through an in-vehicle monitor provided in a vehicle. A driving support system has been suggested in which sensing, such as person recognition, object recognition, or white line detection, is performed using images acquired by the cameras, and various kinds of control are performed on the basis of the result. Examples of the control include control of a vehicle traveling state, such as steering wheel control, brake control, or engine control, control to give a warning to the driver, such as output to the in-vehicle monitor, sound output, or seatbelt control, and the like.

As a device which performs person recognition and object recognition from a captured image, an image recognition device is known which frequency-develops an input image obtained from a camera by fast Fourier transform or wavelet transform, after an object other than a target object desired to be extracted is removed from a specific target region with a frequency as a threshold value, compares the target object with a template held in advance, and detects the target object (for example, see PTL 1). According to this image recognition device, when pedestrian recognition is carried out, the contour of the pedestrian is frequency-developed and set as a template, such that the number of templates necessary for comparison is reduced and a processing load is reduced compared to a case where an image is set as a template, thereby achieving high-speed performance.

In order to improve convenience for a driver, an in-vehicle image processing device is known in which a captured image of a camera is converted to a viewpoint-converted image from a predetermined virtual viewpoint, and the viewpoint-converted image is output to an external device (for example, see PTL 2). According to the in-vehicle image processing device, an operation to convert the captured image to the viewpoint-converted image can be carried out with reference to a viewpoint conversion table in which the coordinate relationship between each pixel of an image (viewpoint-converted image) from a virtual viewpoint and each pixel of a camera image (captured image) is held.

<Citation List>

<Patent Literature>

PTL 1: JP-A-2008-181422
PTL 2: JP-A-2008-048266

<Summary of Invention>

<Technical Problem>

In the in-vehicle image processing device of PTL 2, distortion, stretch, or the like may be attached to the viewpoint-converted image since the viewpoint-converted image is generated on the basis of the viewpoint conversion table. For this reason, the frequency characteristic may differ between the captured image and the viewpoint-converted image. A distortion ratio, a stretch ratio, or the like attached to a captured image differs in each region of an image due to viewpoint conversion, such that the frequency characteristic may differ due to viewpoint conversion.

In the image recognition device of PTL 1, a template image is frequency-developed and held as a template, and an image captured by a camera is frequency-developed and compared with the template to carry out image recognition. When image recognition is carried out using a viewpoint-converted image obtained by the technique of PTL 2, if a template is prepared taking into consideration distortion, stretch, or the like, a template should be prepared for each viewpoint conversion table and for each region of an image, causing a significant increase in the arithmetic operation amount for comparison. Thus, in image recognition processing, it is preferable to use an image prior to viewpoint conversion with no distortion, stretch, or the like.

At the time of image recognition, in general, it is necessary that specific information regarding the edge, shape, or the like of an image is highlighted, and a specific region of the image is extracted. However, when a specific region is extracted from a viewpoint-converted image, it is difficult to stably extract an image due to stretch and distortion caused by the viewpoint conversion processing. For this reason, in image extraction processing necessary for image recognition, it is preferable to use an image prior to viewpoint conversion with no distortion, stretch, or the like.

In recent years, a camera which captures an image has a viewpoint conversion function, and in a device which receives an image of the camera as input, it may be impossible to simply obtain an image before the camera performs viewpoint conversion on a captured image.

The invention has been finalized in consideration of the above-described situation, and an object of the invention is to provide a method of generating an inverse conversion table, a program for generating an inverse conversion table, an image conversion device, an image conversion method, and an image conversion program capable of acquiring an image prior to viewpoint conversion being performed on a predetermined image.

<Solution to Problem>

The invention provides a method of generating an inverse conversion table which generates an inverse conversion table for generating an image prior to viewpoint conversion processing relating to a viewpoint-converted image from the viewpoint-converted image as an inversely converted image. A control unit calculates the distance between a conversion reference coordinate stored in the calculation-target table coordinate of the viewpoint conversion table for generating the viewpoint-converted image and the table coordinate of the inverse conversion table for each conversion reference coordinate, and calculates an inverse conversion reference coordinate which is stored in the calculation-target table coordinate of the inverse conversion table on the basis of the distance between the table coordinate of the viewpoint conversion table and the conversion reference coordinate stored in the table coordinate.

With this method, it is possible to easily generate an inverse conversion table for generating an inversely converted image prior to viewpoint conversion processing from a viewpoint-converted image.

In the method of generating an inverse conversion table of the invention, the control unit may exclude the conversion reference coordinate stored in the table coordinate of the viewpoint conversion table out of a predetermined range from the conversion reference coordinate for the calculation of the distance.

With this method, it is possible to further reduce a processing load when generating an inverse conversion table. That is, it is possible to change the number of conversion reference coordinates on a target viewpoint conversion table within a designated range to find one inverse conversion reference coordinate, and to omit coordinates with little influence on the calculated inverse conversion reference coordinate. For this reason, it is possible to suppress the calculation amount without deterioration in the precision of the calculation result.

The invention provides a program for generating an inverse conversion table which executes the procedure of the method of generating an inverse conversion table.

With this program, it is possible to easily generate an inverse conversion table for generating an inversely converted image prior to viewpoint conversion processing from a viewpoint-converted image.

The invention also provides an image conversion device. The image conversion device includes a memory which stores an inverse conversion table generated by the method of generating an inverse conversion table, an image input unit which receives, from an imaging device which generates a viewpoint-converted image from a captured image, the viewpoint-converted image as input, an image conversion operation unit which generates from the viewpoint-converted image an image prior to viewpoint conversion processing relating to the viewpoint-converted image as an inversely converted image using the inverse conversion table, and an image output unit which outputs the inversely converted image generated by the image conversion operation unit.

With this configuration, even when a viewpoint-converted image is input from the imaging device having a viewpoint conversion function, it is possible to easily generate an inversely converted image. An inverse conversion table is held in the image conversion device in advance, it is not necessary to provide the calculation time of the inverse conversion reference coordinate, making it possible to significantly reduce the operation time and to output an inversely converted image in real time. When an inversely converted image is input from an external detection device, it becomes possible for the detection device to easily carry out image recognition using an inversely converted image.

In the image conversion device of the invention, the image conversion operation unit may perform interpolation processing on the viewpoint-converted image on the basis of pixel values around the inverse conversion reference coordinate of the inverse conversion table to generate the inversely converted image.

With this configuration, it is possible to smoothly obtain a higher-quality inversely converted image.

The image conversion device of the invention may further include a memory which stores a viewpoint conversion table for viewpoint conversion processing on the inversely converted image. When a switching signal indicating the completion of object recognition is received from a detection device which carries out object recognition in the inversely converted image, the image conversion operation unit may generate the viewpoint-converted image from the inversely converted image using the viewpoint conversion table.

With this configuration, viewpoint conversion is performed with the recognition result of image recognition which is carried out by the detection device using an inversely converted image, such that it is possible to display a viewpoint-converted image while reflecting the recognition result, thereby improving convenience for the user.

In the image conversion device of the invention, the viewpoint conversion table may be the same viewpoint conversion table as a viewpoint conversion table which is held in the imaging device.

With this configuration, viewpoint conversion is performed with the recognition result of image recognition which is carried out by the detection device using an inversely converted image. Thus, it is possible to display the same image as an image prior to inverse conversion processing while reflecting the recognition result, thereby improving convenience for the user.

In the image conversion device of the invention, the viewpoint conversion table may be a viewpoint conversion table different from a viewpoint conversion table which is held in the imaging device.

With this configuration, viewpoint conversion is performed with the recognition result of image recognition which is carried out by the detection device using an inversely converted image. Thus, it is possible to display a third image which is different from an inversely converted image and an image prior to inverse conversion processing while reflecting the recognition result, thereby improving convenience for the user.

The invention also provides an image conversion method. The image conversion method includes the steps of receiving, from an imaging device which generates a viewpoint-converted image from a captured image, the viewpoint-converted image as input, generating from the viewpoint-converted image an image prior to viewpoint conversion processing relating to the viewpoint-converted image as an inversely converted image using an inverse conversion table which is generated by the method of generating an inverse conversion table and stored in a memory, and outputting the generated inversely converted image.

With this method, even when a viewpoint-converted image is input from the imaging device having a viewpoint conversion function, it becomes possible to easily carry out image recognition with high precision. An inverse conversion table is prepared in advance, it is not necessary to provide the calculation time of the inverse conversion reference coordinate, it becomes possible to significantly reduce the operation time and to output an inversely converted image in real time.

An image conversion program of the invention is a program which executes the procedure of the image conversion method.

With this program, even when a viewpoint-converted image is input from the imaging device having a viewpoint conversion function, it becomes possible to easily carry out image recognition with high precision. An inverse conversion table is prepared in advance, it is not necessary to provide the calculation time of the inverse conversion reference coordinate, it becomes possible to significantly reduce the operation time and to output an inversely converted image in real time.

<Advantageous Effects of Invention>

According to the invention, it becomes possible to acquire an image prior to viewpoint conversion being performed on a predetermined image.

<Brief Description of Drawings>

Fig. 1 is a block diagram showing an example of the configuration of an inverse conversion table generation device in a first embodiment of the invention.
Fig. 2 is an explanatory view for finding an inverse conversion reference coordinate in the first embodiment of the invention.
Fig. 3 is a block diagram showing an example of the configuration of an image conversion device in the first embodiment of the invention.
Fig. 4 is an image view of inverse conversion processing which is performed using an inverse conversion table in the first embodiment of the invention.
Fig. 5 is a block diagram showing an example of the configuration of an image conversion device in a second embodiment of the invention.
Fig. 6 is a flowchart showing an example of the operation of an image conversion device in the second embodiment of the invention.

<Description of Embodiments>

Hereinafter, a method of generating an inverse conversion table, a program for generating an inverse conversion table, an image conversion device, an image conversion method, and an image conversion program according to an embodiment of the invention will be described with reference to the drawings.

The image conversion device of this embodiment is, for example, an in-vehicle camera.

In this embodiment, the image conversion device performs inverse conversion processing for generating an inversely converted image from a viewpoint-converted image using an inverse conversion table generated by an inverse conversion table generation method. The inverse conversion table is a table which is used to convert the coordinate system of a viewpoint-converted image to the coordinate system (that is, the coordinate system of a captured image) prior to viewpoint conversion processing being performed. The inverse conversion table stores information (hereinafter, also referred to as an inverse conversion reference coordinate) indicating to which pixel of the viewpoint-converted image each pixel of the captured image corresponds. The image conversion device is, for example, a device which receives an image from an in-vehicle camera as input.

(First Embodiment)

First, a method of generating an inverse conversion table of this embodiment will be described.

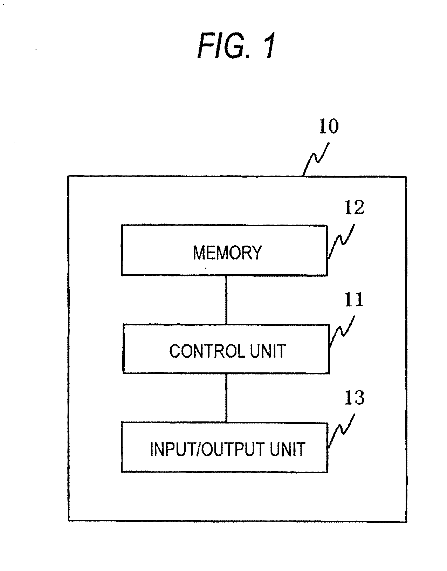

Fig. 1 is a block diagram showing an example of the configuration of an inverse conversion table generation device according to a first embodiment of the invention. The inverse conversion table generation device generates an inverse conversion table by a method of generating an inverse conversion table. An inverse conversion table generation device 10 shown in Fig. 1 mainly includes a control unit 11, a memory 12, and an input/output unit 13.

The control unit 11 includes a CPU and the like, and controls processing in the units 11 to 13 of the inverse conversion table generation device 10. The control unit 11 performs operation processing for calculating the inverse conversion reference coordinate of the inverse conversion table.

The memory 12 stores various kinds of information. For example, the memory 12 stores a viewpoint conversion table which is used for viewpoint conversion processing from the coordinate system of a captured image to the coordinate system of a viewpoint-converted image. The viewpoint conversion table stores information (hereinafter, also referred to as a conversion reference coordinate) indicating to which pixel of the captured image each pixel of the viewpoint-converted image corresponds. The memory 12 stores an inverse conversion table generated by the control unit 11. The memory 12 may store an inverse conversion table generation program for generating an inverse conversion table which is executed by the control unit 11.

The input/output unit 13 carries out the input/output of various kinds of information. For example, the input/output unit 13 outputs an inverse conversion table generated by the control unit 11. The input/output includes the transmission/reception of information regarding an inverse conversion table with respect to an external device or the storage of information regarding an inverse conversion table in a storage medium, such as a CD-ROM, thereby providing information regarding a generated inverse conversion table to an external device (not shown).

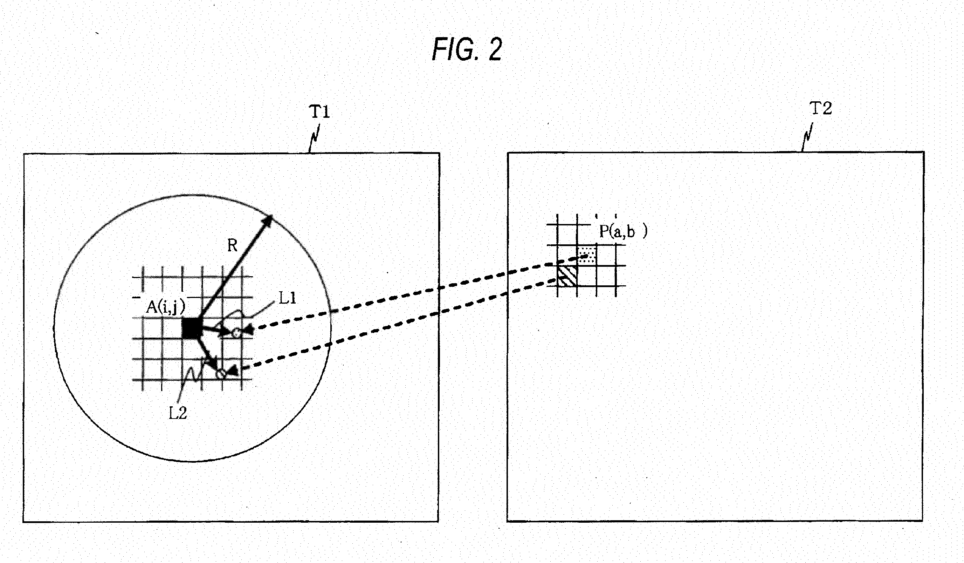

Next, a method of generating an inverse conversion table T1, that is, a method of calculating the inverse conversion reference coordinate of the inverse conversion table T1 will be described with reference to Fig. 2.

First, when the x and y coordinates of an inverse conversion reference coordinate A(i,j) stored in a table coordinate (i,j) on the inverse conversion table T1 are Ax and Ay, the following expression is established.

$$[\text{Equation 1}]$$

$$A(i,j) = (Ax, Ay)$$

Similarly, when the x and y coordinates of a conversion reference coordinate P(a,b) stored in a table coordinate (a,b) on a viewpoint conversion table T2 held in an imaging device 25 are Px and Py, the following expression is established.

## [Equation 2]

$$P(a,b)=(Px,Py)$$

The control unit 11 calculates each distance L(a,b) (in Fig. 2, two distances L1 and L2 are shown) between the table coordinate (i,j) for calculating an inverse conversion reference coordinate and each conversion reference coordinate P(a,b) stored in the viewpoint conversion table T2. The distance L(a,b) is expressed as follows. The distance L(a,b) is calculated for each conversion reference coordinate with respect to a table coordinate as a calculation target.

## [Equation 3]

$$L(a,b) = \sqrt{(Px - i)^2 + (Py - j)^2}$$

The conversion reference coordinates P(a,b) are the conversion reference coordinates stored in all the table coordinates in the search range of the viewpoint conversion table T2. The control unit 11 may set the search range of the viewpoint conversion table T2 over the entire viewpoint conversion table T2 or within a predetermined range. The search range is limited to within a predetermined range, thereby reducing a load of an arithmetic operation to calculate a distance or the like when generating an inverse conversion table.

Subsequently, the control unit 11 calculates a weight coefficient K(a,b) of each conversion reference coordinate P(a,b). The weight coefficient K(a,b) is expressed as follows. The weight coefficient K(a,b) is calculated for each conversion reference coordinate. That is, the coefficient K is calculated on the basis of the distance L(a,b).

## [Equation 4]

$$K(a,b)=R-L(a,b) \ (K>0)$$

Here, R represents the maximum distance between the table coordinate (i,j) for calculating the inverse conversion reference coordinate and the conversion reference coordinate P(a,b), and can be arbitrarily determined in accordance with precision and the calculation amount. The conversion reference coordinate P(a,b) having a negative weight coefficient K is excluded.

Subsequently, the control unit 11 calculates Ax and Ay of the inverse conversion reference coordinate A(i,j) stored in the inverse conversion table T1 using each weight coefficient K. Ax and Ay of the inverse conversion reference coordinate A(i,j) are expressed as follows.

## [Equation 5]

$$Ax = \frac{\sum (K(a,b) \times a)}{\sum (K(a,b))}, Ay = \frac{\sum (K(a,b) \times b)}{\sum (K(a,b))}$$

The inverse conversion reference coordinate calculated by the processing for calculating the inverse conversion reference coordinate of the inverse conversion table T1 is stored in the inverse conversion table T1. In this way, the inverse conversion table T1 is generated.

Next, an image conversion device and an image conversion method of this embodiment will be described.

The image conversion device of this embodiment can accurately output an inversely converted image from an input viewpoint-converted image in a short time. As the image conversion device, for example, an inverse conversion device is considered which receives an output image of an in-vehicle camera (an example of an imaging device) as input and converts the output image.

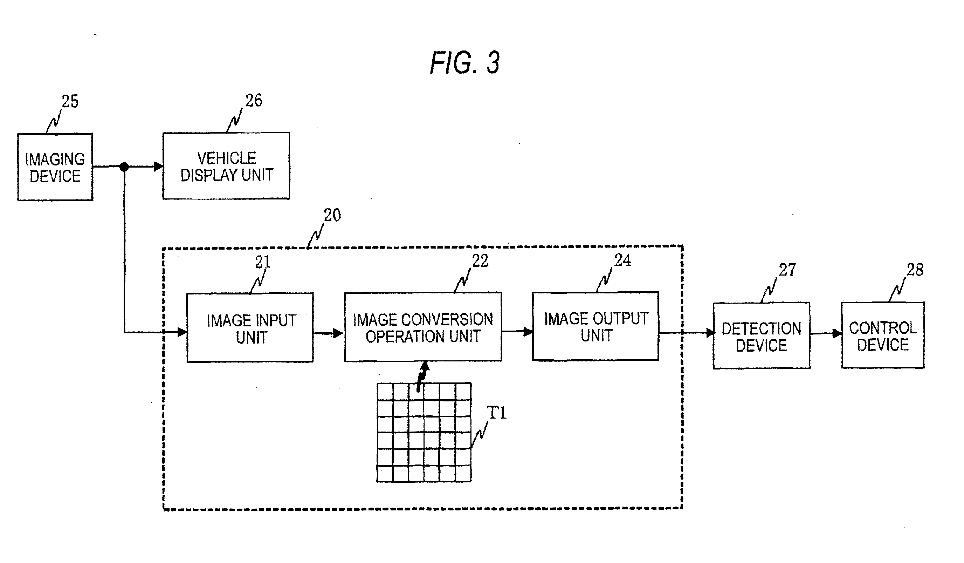

Fig. 3 is a block diagram showing an example of the configuration of an image conversion device according to the first embodiment of the invention. An image conversion device 20 shown in Fig. 3 is mounted in a vehicle (not shown). In the vehicle are mainly mounted an imaging device 25, a vehicle display unit 26, a detection device 27, and a control device 28, in addition to the image conversion device 20.

The imaging device 25 captures an image around the vehicle, performs conversion processing on the acquired image using the viewpoint conversion table, and outputs a viewpoint-converted image. The vehicle display unit 26 is a display unit, such as an in-vehicle monitor provided in the vehicle, which displays the viewpoint-converted image input from the imaging device 25. The detection device 27 carries out person or object detection and state detection of a white line, a traffic signal, or the like from an image input from the image conversion device 20, and outputs the detection result as a detection signal. The control device 28 controls a steering wheel operation, a brake operation, an engine operation, and the like on the basis of the detection signal input from the detection device 27. These devices are electrically connected to each other.

The imaging device 25, the vehicle display unit 26, and the detection device 27 which are connected to the image conversion device 20 may be connected to the image conversion device 20 through an electronic control unit (not shown) provided in the vehicle.

The image conversion device 20 mainly includes an image input unit 21, an image conversion operation unit 22, and an image output unit 24.

The image input unit 21 acquires the viewpoint-converted image from the imaging device 25 and holds the viewpoint-converted image in a frame memory. The frame memory is a random access memory in which reading processing is performed irregularly in the inverse conversion processing by the image conversion operation unit 22.

The image conversion operation unit 22 performs inverse conversion processing on the viewpoint-converted image input from the image input unit 21 with reference to an inverse conversion table. The inverse conversion table T1 is an inverse conversion table generated by the above-described method of generating an inverse conversion table, and is held in a memory (not shown) of the image conversion device 20.

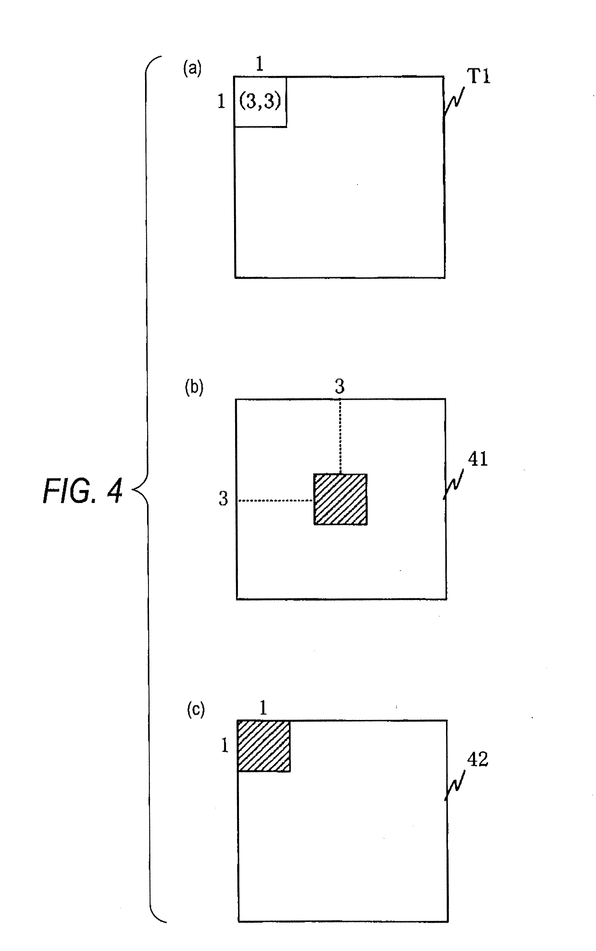

Fig. 4 is an image view of inverse conversion processing which is performed using the inverse conversion table T1. In the example shown in Fig. 4, (3,3) as an inverse conversion reference coordinate is stored at the position of the table coordinate (1,1) of the inverse conversion table T1 (see Fig. 4(a)). This means that the pixel at the position (3,3) of an input image 41 (viewpoint-converted image) (see Fig. 4(b)) is stored at the position (1,1) of an output image 42 (a captured image prior to viewpoint conversion) (see Fig. 4(c)). Thus, the image conversion device 20 can obtain an image prior to viewpoint conversion processing. The result of the inverse conversion processing includes the pixel value of each coordinate in the output image.

The image conversion operation unit 22 may perform interpolation processing on the viewpoint-converted image at the time of inverse conversion processing. In the interpolation processing, when the inverse conversion reference coordinate of the inverse conversion table T1 includes a non-integer, the image conversion operation unit 22 reads the pixels values around the coordinate represented by the inverse conversion reference coordinate from the frame memory. Around the coordinate represented by the inverse conversion reference coordinate are, for example, four integer coordinates adjacent to the inverse conversion reference coordinate. For example, the average value of the read pixel values is calculated as an interpolation pixel value. For example, when (5.5,5.5) is stored at the position of the table coordinate (2,2) of the inverse conversion table T1 as an inverse conversion reference coordinate, the pixel values of the coordinates (5,5), (5,6), (6,5), (6,6) around the coordinate (5.5,5.5) of the input image are averaged, and the result is set as an interpolation pixel value. Thus, the interpolation pixel value is stored at the position of (2,2) of the output image. Therefore, it is possible to smoothly perform inverse conversion on an image.

Information regarding the result of the inverse conversion processing by the image conversion operation unit 22 or/and the result of the interpolation processing is sent to the image output unit 24.

The image output unit 24 holds the result of the inverse conversion processing by the image conversion operation unit 22 or/and the result of the interpolation processing in the frame memory. That is, the image output unit 24 holds the pixel values of the coordinates of the output image. The image output unit 24 is connected to an external device, such as the detection device 27, and outputs an inversely converted image subjected to the inverse conversion processing or the like.

A memory (not shown) may store an image conversion program for carrying out image conversion by the image conversion device.

According to the image conversion device 20 of this embodiment, since the inversely converted image is output to the detection device 27, the detection device 27 can acquire an image prior to viewpoint conversion by the imaging device 25, and can perform processing, such as object recognition, with high precision. The inverse conversion table T1 generated by the method of generating an inverse conversion table is held in the image conversion device 20 in advance, such that it is not necessary to provide the calculation time of the inverse conversion reference coordinate at the time of image conversion. If necessary, it should suffice that only the interpolation processing is performed. Therefore, it becomes possible to significantly reduce the arithmetic operation time and to output the inversely converted image in real time.

(Second Embodiment)

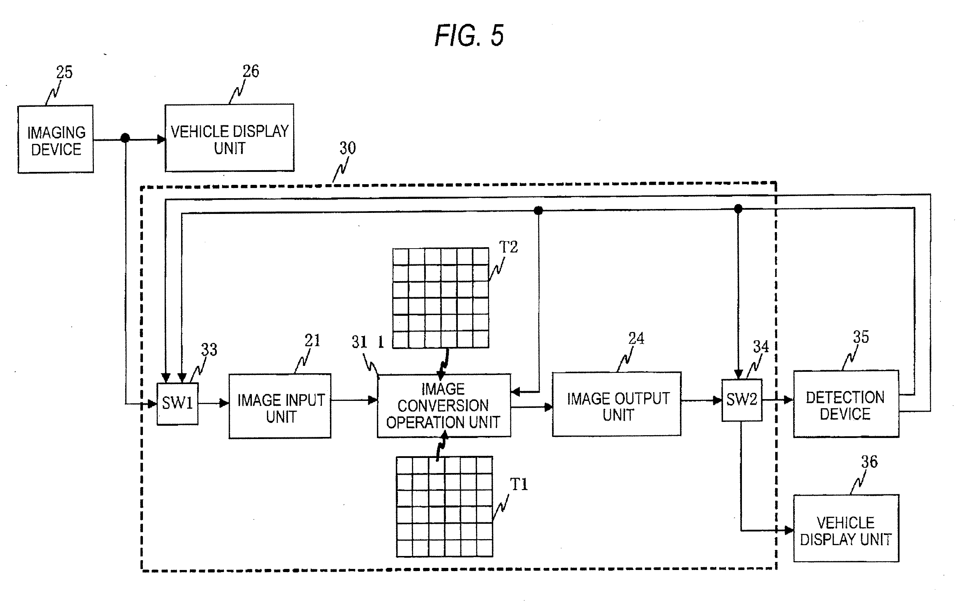

Fig. 5 is a block diagram showing an example of the configuration of an image conversion device according to a second embodiment of the invention. An image conversion device 30 shown in Fig. 5 is mounted in a vehicle (not shown). In the vehicle are mainly mounted an imaging device 25, a vehicle display unit 26, a detection device 35, and a vehicle display unit 36, in addition to the image conversion device 30. In Fig. 5, the same constituent elements as those in Fig. 3 are represented by the same reference numerals, and description thereof will be simplified or omitted.

Similarly to the detection device 27, the detection device 35 carries out person or object detection and state detection of a white line, a traffic signal, or the like from an image input from the image conversion device 20, and outputs the detection result as a detection signal. The detection device 35 outputs switching signals for turning on switches 33 and 34 of the image conversion device 30. The detection device 35 outputs an inversely converted image to the image conversion device 30. The vehicle display unit 36 superimposes the object recognition result by the detection device 35 on the viewpoint-converted image and outputs the result. These devices are electrically connected to each other.

The imaging device 25, the vehicle display unit 26, the detection device 35, and the vehicle display unit 36 which are connected to the image conversion device 30 may be connected to the image conversion device 30 through an electronic control unit (not shown) provided in the vehicle.

The image conversion device 30 mainly includes an input switching unit 33, an image input unit 21, an image conversion operation unit 31, an image output unit 24, and an output switching unit 34.

The image conversion operation unit 31 receives a switching signal output from the detection device 35 and selects one of the inverse conversion table and the viewpoint conversion table on the basis of the switching signal. When the inverse conversion table is selected, inverse conversion processing or/and interpolation processing is performed, and when the viewpoint conversion table is selected, viewpoint conversion processing is performed. The viewpoint conversion processing can be performed by a known method. The inverse conversion table T1 and the viewpoint conversion table T2 are held in a memory (not shown) in advance. The viewpoint conversion table T2 may be different from a viewpoint conversion table which is held in the imaging device 25 or may be identical to a viewpoint conversion table which is held in the imaging device 25. The viewpoint conversion table T2 which is identical to the viewpoint conversion table of the imaging device 25 is held, thereby acquiring an image before an inversely converted image is acquired. The viewpoint conversion table T2 which is different from the viewpoint conversion table of the imaging device 25 is held, thereby obtaining an image from a third viewpoint. In the image from the third viewpoint, a table which is used to expand or reduce a specific portion of an input image to generate an output image is held as the viewpoint conversion table T2, thereby obtaining a third image different from the viewpoint-converted image and the inversely converted image.

The input switching unit 33 has the imaging device 25 and the detection device 35 connected to the input side thereof, receives a switching signal output from the detection device 35, and switches an input path to the image input unit 21. The input switching unit 33 receives the viewpoint-converted image output from the imaging device 25 and a detection image (an image including the inversely converted image and the detection result) having superimposed thereon the detection result output from the detection device 35 as input. The input switching unit 33 receives a switching signal output from the detection device 35 and selects an image held in the image input unit 21 on the basis of the switching signal.

The output switching unit 34 has the image output unit 24 connected to the input side thereof, receives a switching signal output from the detection device 35, and switching an output path to one of the detection device 35 and the vehicle display unit 36 connected to the image conversion device 30. That is, an image output from the image output unit 24 is input to the output switching unit 34. The output switching unit 34 outputs an image to one of the detection device 35 and the vehicle display unit 36 connected to the image conversion device 30 in response to a switching signal output from the detection device 35.

Next, the operation of the image conversion device 30 of this embodiment will be described.

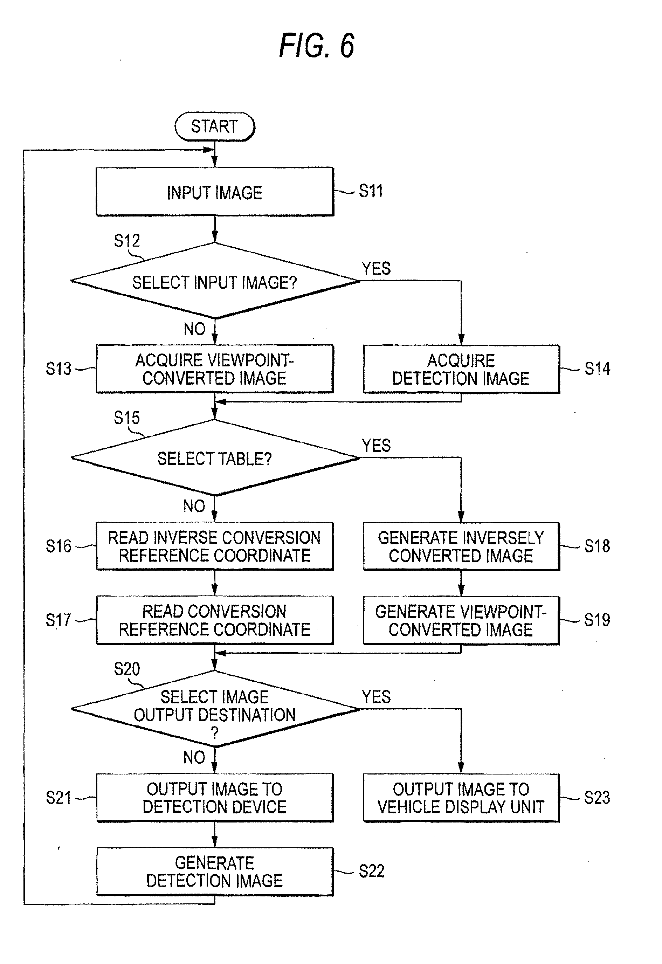

Fig. 6 is a flowchart showing an example of the operation of the image conversion device 30.

First, the input switching unit 33 is connected to the imaging device 25 or the detection device 35, and receives the viewpoint-converted image from the imaging device 25 or the detection image from the detection device 35 as input (Step S11). Subsequently, the input switching unit 33 selects the viewpoint-converted image from the imaging device 25 or the detection image from the detection device 35 as an image to be sent to the image input unit 21 on the basis of a switching signal output from the detection device 35 (Step S12). The switching signal includes a switching signal (hereinafter, called a Y signal) indicating the input timing of the detection image and a switching signal (hereinafter, called an N signal) indicating that it is not the input timing of the detection image. That is, the Y signal indicates that object recognition by the detection device 35 is completed.

When the input switching unit 33 receives the N signal, the imaging device 25 and the image input unit 21 are connected to each other, and the image input unit 21 receives the viewpoint-converted image output from the imaging device 25 as input (Step S13). Meanwhile, when the input switching unit 33 receives the Y signal, the detection device 35 and the image input unit 21 are connected to each other, and the image input unit 21 receives the detection image output from the detection device 35 as input (Step S14). In the input switching unit 33, when an image of a first frame is input (that is, at the time of an initial operation), it is assumed that the N signal is transmitted from the detection device 35.

Subsequently, the image conversion operation unit 31 selects the viewpoint conversion table or the inverse conversion table as a table for reading a reference coordinate on the basis of the switching signal output from the detection device 35 (Step S15).

When the N signal is received, the image conversion operation unit 31 selects the inverse conversion table to read the inverse conversion reference coordinate (Step S16). The image conversion operation unit 31 generates the inversely converted image from the viewpoint-converted image held in the image input unit 21 on the basis of the inverse conversion reference coordinate and outputs the inversely converted image to the image output unit 24 (Step S17). Meanwhile, when the Y signal is received, the image conversion operation unit 31 selects the viewpoint conversion table to read the conversion reference coordinate (Step S18). The image conversion operation unit 31 generates the viewpoint-converted image from the detection image held in the image input unit 21 on the basis of the conversion reference coordinate and outputs the viewpoint-converted image to the image output unit 24 (Step S19).

Subsequently, the output switching unit 34 selects an output destination for outputting the inversely converted image or the viewpoint-converted image from the image output unit 24 (Step S20). At this time, when the N signal is received, the output switching unit 34 outputs the inversely converted image to the detection device 35 (Step S21). The detection device 35 generates the detection image using the input inversely converted image (S22). The detection image is sent to the input switching unit 33 connected to the detection device 35 along with the Y signal.

Meanwhile, when the output switching unit 34 receives the Y signal, the vehicle display unit 36 outputs the viewpoint-converted image (Step S23). The detection result of an object or the like by the detection device 35 is superimposed on the viewpoint-converted image, and a frame indicating the recognized object is displayed along with the viewpoint-converted image.

According to the image conversion device 30 of this embodiment, object detection or the like can be carried out using the inversely converted image, and the detection result can be superimposed on the viewpoint-converted image and displayed. When the image conversion operation unit 31 holds a viewpoint conversion table different from that held in the imaging device 25, unlike an image output from the imaging device 25, it becomes possible to provide an image which is viewpoint-converted again from a virtual viewpoint such that a driver understands detection result information more easily. Although if the image conversion device 30 of this embodiment is realized using the image conversion device 20 of the first embodiment, the system configuration is expanded, according to the image conversion device 30 of the embodiment, it is possible to simplify the system configuration.

Although in this embodiment, a case has been described where the viewpoint conversion processing and the inverse conversion processing mainly refer to changing a viewpoint of an image to acquire an image from a different viewpoint, that is, projecting a target object on various projection surfaces on a space and acquiring an image when the target object is viewed from a virtual viewpoint different from an actual viewpoint, the invention is not limited thereto. For example, the acquisition of an image which is obtained by partially expanding or reducing a partial region of an image is included in the viewpoint conversion processing and the inverse conversion processing of this embodiment.

Although the preferred embodiments of the invention have been described, the invention is not limited to the above-described embodiments, and it should be understood that those skilled in the art can modify the above-described embodiments within the scope of the invention.

Although the invention has been described in detail or with reference to the specific embodiment, it should be apparent to those skilled in the art that various changes or alterations may be made without departing from the spirit and scope of the invention.

This application is based on Japanese Patent Application No. 2010-131237, filed on June 8, 2010, the content of which is incorporated herein by reference.

Industrial Applicability

The invention is useful for a method of generating an inverse conversion table, a program for generating an inverse conversion table, an image conversion device, an image conversion method, an image conversion program, and the like capable of acquiring an image prior to viewpoint conversion being performed on a predetermined image.

Reference Signs List

| 10: | inverse conversion table generation device |
| 11: | control unit |
| 12: | memory |
| 13: | input/output unit |
| 20, 30: | image conversion device |
| 21: | image input unit |
| 22, 31: | image conversion operation unit |
| 24: | image output unit |
| 25: | imaging device |
| 26, 36: | vehicle display unit |
| 27, 35: | detection device |
| 28: | control device |
| 33: | input switching unit |
| 34: | output switching unit |
| T1: | inverse conversion table |
| T2: | viewpoint conversion table |

**Claims**

1. A method of generating an inverse conversion table which generates an inverse conversion table for generating an image prior to viewpoint conversion processing relating to a viewpoint-converted image from the viewpoint-converted image as an inversely converted image,
wherein a control unit calculates the distance between a conversion reference coordinate stored in the table coordinate of the viewpoint conversion table for generating the viewpoint-converted image and the calculation-target table coordinate of the inverse conversion table for each conversion reference coordinate, and
calculates an inverse conversion reference coordinate which is stored in the calculation-target table coordinate of the inverse conversion table on the basis of the distance between the table coordinate of the viewpoint conversion table and the conversion reference coordinate stored in the table coordinate.

2. The method according to claim 1, wherein the control unit excludes the conversion reference coordinate stored in the table coordinate of the viewpoint conversion table out of a predetermined range from the conversion reference coordinate for the calculation of the distance.

3. A program for generating an inverse conversion table which causes a computer to execute the procedure of the method of generating an inverse conversion table according to claim 1 or 2.

4. An image conversion device comprising:

   a memory which stores an inverse conversion table generated by the method of generating an inverse conversion table according to claim 1 or 2;
   an image input unit which receives, from an imaging device which generates a viewpoint-converted image from a captured image, the viewpoint-converted image as input;

an image conversion operation unit which generates from the viewpoint-converted image an image prior to viewpoint conversion processing relating to the viewpoint-converted image as an inversely converted image using the inverse conversion table; and

an image output unit which outputs the inversely converted image generated by the image conversion operation unit.

5. The image conversion device according to claim 4,
wherein the image conversion operation unit performs interpolation processing on the viewpoint-converted image on the basis of pixel values around the inverse conversion reference coordinate of the inverse conversion table to generate the inversely converted image.

6. The image conversion device according to claim 4 or 5, further comprising:

a memory which stores a viewpoint conversion table for viewpoint conversion processing on the inversely converted image,

wherein, when a switching signal indicating the completion of object recognition is received from a detection device which carries out object recognition in the inversely converted image, the image conversion operation unit generates the viewpoint-converted image from the inversely converted image using the viewpoint conversion table.

7. The image conversion device according to claim 6,
wherein the viewpoint conversion table is the same viewpoint conversion table as a viewpoint conversion table which is held in the imaging device.

8. The image conversion device according to claim 6,
wherein the viewpoint conversion table is a viewpoint conversion table different from a viewpoint conversion table which is held in the imaging device.

9. An image conversion method comprising the steps of:

receiving, from an imaging device which generates a viewpoint-converted image from a captured image, the viewpoint-converted image as input;

generating from the viewpoint-converted image an image prior to viewpoint conversion processing relating to the viewpoint-converted image as an inversely converted image using an inverse conversion table which is generated by the method of generating an inverse conversion table according to claim 1 or 2 and stored in a memory; and

outputting the generated inversely converted image.

10. An image conversion program which causes a computer to execute the procedure of the image conversion method according to claim 9.

*FIG. 1*

FIG. 2

EP 2 581 875 A1

## FIG. 3

EP 2 581 875 A1

(a)

1

1  (3,3)

T1

*FIG. 4*

(b)

3

3

41

(c)

1

1

42

FIG. 5

# FIG. 6

```
                          START

                    INPUT IMAGE ─── S11

           S12
                 SELECT INPUT IMAGE?           YES

                        NO

  S13 ─ ACQUIRE VIEWPOINT-              ACQUIRE            S14
         CONVERTED IMAGE          DETECTION IMAGE

          S15
                    SELECT TABLE?               YES

                        NO

  S16 ─ READ INVERSE CONVERSION      GENERATE INVERSELY   S18
         REFERENCE COORDINATE        CONVERTED IMAGE

  S17 ─ READ CONVERSION              GENERATE VIEWPOINT-  S19
         REFERENCE COORDINATE        CONVERTED IMAGE

          S20
                 SELECT IMAGE
               OUTPUT DESTINATION              YES
                     ?
                        NO

  S21 ─ OUTPUT IMAGE TO              OUTPUT IMAGE TO      S23
         DETECTION DEVICE            VEHICLE DISPLAY UNIT

          GENERATE
         DETECTION IMAGE ─── S22
```

17

## INTERNATIONAL SEARCH REPORT

| | International application No. |
|---|---|
| | PCT/JP2011/002210 |

**A. CLASSIFICATION OF SUBJECT MATTER**
*G06T3/00*(2006.01)i, *B60R1/00*(2006.01)i, *G08G1/16*(2006.01)i, *H04N7/18* (2006.01)i

According to International Patent Classification (IPC) or to both national classification and IPC

**B. FIELDS SEARCHED**

Minimum documentation searched (classification system followed by classification symbols)
G06T3/00, B60R1/00, G08G1/16, H04N7/18

Documentation searched other than minimum documentation to the extent that such documents are included in the fields searched
Jitsuyo Shinan Koho        1922–1996   Jitsuyo Shinan Toroku Koho    1996–2011
Kokai Jitsuyo Shinan Koho  1971–2011   Toroku Jitsuyo Shinan Koho    1994–2011

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2010/044127 A1  (Mitsubishi Electric Corp.), 22 April 2010 (22.04.2010), paragraph [0066] (Family: none) | 1–10 |
| A | JP 2007-150658 A  (Alpine Electronics, Inc.), 14 June 2007 (14.06.2007), entire text; all drawings (Family: none) | 1–10 |
| A | JP 2000-215299 A  (Toshiba Corp.), 04 August 2000 (04.08.2000), paragraphs [0020], [0021] (Family: none) | 1–10 |

☐ Further documents are listed in the continuation of Box C.   ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>12 May, 2011 (12.05.11) | Date of mailing of the international search report<br>24 May, 2011 (24.05.11) |
|---|---|
| Name and mailing address of the ISA/<br>Japanese Patent Office | Authorized officer |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008181422 A
- JP 2008048266 A
- JP 2010131237 A